Europäisches Patentamt

European Patent Office

Office européen des brevets

(11) Veröffentlichungsnummer: **0 501 218 A2**

# (12) EUROPÄISCHE PATENTANMELDUNG

(21) Anmeldenummer: **92102235.6**

(22) Anmeldetag: **11.02.92**

(51) Int. Cl.5: **F16P 3/08**

(30) Priorität: **26.02.91 DE 4106009**

(43) Veröffentlichungstag der Anmeldung:
**02.09.92 Patentblatt 92/36**

(84) Benannte Vertragsstaaten:
**AT BE CH DE DK ES FR GB GR IT LI LU NL PT SE**

(71) Anmelder: **ELGE ELEKTRONIK-GERÄTEWERK GmbH. & Co.**
**Sigmund-Baumgärtner-Strasse 26**
**W-8819 Schopfloch(DE)**

(72) Erfinder: **Der Erfinder hat auf seine Nennung verzichtet**

(74) Vertreter: **Otte, Peter, Dipl.-Ing.**
**Tiroler Strasse 15**
**W-7250 Leonberg(DE)**

(54) Tür- oder Schutzhaubenverriegelungssteuerung für eine Schutzeinrichtung bei Maschinen.

(57) Bei einer Tür- oder Schutzhaubenverriegelungssteuerung für eine Schutzeinrichtung mit normaler oder überhöhter Sicherheit bei insbesondere Drehbewegungen durchführenden Maschinen wird vorgeschlagen, in den durch Taster zu betätigenden Stromkreis für den Türverriegelungsmechanismus einen Stillstandsüberwachungswächter anzuordnen, der aus einer redundanten Drehbewegungs-Signalauswertung der Zielanlage einer bei dieser schon vorhandenen redundant arbeitenden Drehbewegungsüberwachungseinrichtung entnommen ist, die jede Achse mit zwei Drehbewegungssensoren überwacht, so daß für den redundanten Betrieb der Türverriegelung eine eigene Drehbewegungssensorik entbehrlich ist.

EP 0 501 218 A2

# Fig.1

Überwachungssystem ( Grundgerät ) mit 2 Achskreisüberwachungen

## Stand der Technik

Die Erfindung geht aus von einer Tür- oder Schutzhaubenverriegelungssteuerung nach dem Oberbegriff des Anspruchs 1.

Bekannte Sicherheitsschaltungen, die auch Tür-Überwachungsbausteine umfassen, lassen sich der DE-Zeitschrift KEM 89, Januar, Seiten 55/56 entnehmen- "Erst bei Störung schalten".

Bei dieser Veröffentlichung handelt es sich um den Einsatz sogenannter Sicherheitsrelais-Bausteine, durch die sich verdrahtungssparende Kompaktlösungen erzielen lassen und die auch in den Bereich der Schutztürüberwachungen und Schutztürzuhaltungen bei Maschinen eingesetzt werden können. Üblicherweise dienen solche Überwachungsschaltungen oder Zuhaltungen von Schutztüren der Sicherheit von Personen vor Unfällen durch automatische Bewegungsabläufe bei Maschinen, Anlagen und auch bestimmte Bewegungsabläufe durchführenden Industrierobotern. Mit zunehmender Komplexität von Fertigungsabläufen können solche Sicherheitsschaltungen für die Verriegelung bzw. Entriegelung von Türen oder Schutzhauben auch vermehrt im Maschinenschutz selbst vor unerwünschten Unterbrechungen automatischer Abläufe dienen. Dabei kann zwischen einer Vielzahl von Schaltungen unterschieden werden, beispielsweise den Einsatz von zwei wechselseitig arbeitenden Überwachungsschaltern, von zwei parallel arbeitenden Überwachungsschaltern und Ausführungen mit oder ohne Verriegelung (bzw. Zuhaltung). Solche Türverriegelungen existieren in federdruck- oder magnetkraftverriegelter Ausführung.

Zum Verriegeln oder Entriegeln von Türen werden üblicherweise manuell zu betätigende Tastschalter eingesetzt, so daß Verriegelungsmagnete beaufschlagt werden können, falls die entsprechenden Strompfade durch weitere, sicherheitsrelevante Schalter freigegeben sind. Gleichzeitig wird die Türposition durch Öffner oder Schließer separat zum Verriegelungsmagneten abgetastet, woraus weitere Schaltbedingungen abgeleitet werden können. Wesentlich ist hierbei ferner, daß solche Entriegelungs- bzw. Verriegelungsstromkreise für Magnete oder auf sonstiger Basis auch sogenannte Stillstandswächter in geeigneter Form enthalten, die sicherstellen, daß erst bei Stillstand der Maschine bzw. Beendigung einer Drehbewegung entriegelt und somit eine Tür oder Haube geöffnet werden kann (a.a.O. Seite 56 rechte Spalte).

Aus den DE-OS'en 38 37 218 und 39 00 733 sind ferner Schutzeinrichtungen zur Kriech- und Drehbewegungsüberwachung mit normaler oder erhöhter Sicherheit bei Maschinen bekannt, wobei sich die in der DE-OS 39 00 733 beschriebene Sicherheitsschaltung auf eine Überwachungsschaltung im modularen Aufbau bezieht, die durch Anreihung zusätzlicher Überwachungsschaltungen auch für Maschinen mit mehreren, jeweils Drehbewegungen durchführenden Achsen bezieht.

Da die vorliegende Erfindung speziell die in den beiden DE-OS'en 38 37 218 und 39 00 733 angegebenen Sicherheitsschaltungen in besonders vorteilhafter Weise ausgestaltet und eine Tür- oder Schutzhaubenverriegelungssteuerung unter Ausnutzung von von diesen Sicherheitsschaltungen gelieferten bzw. dort vorhandenen Drehbewegungssignalen in ihre eigene Sicherheitskonzeption einbezieht, wird empfohlen, zum besseren Verständnis der Erfindung, diese jeweiligen Offenlegungsschriften, auf die hiermit ausdrücklich Bezug genommen und deren Offenbarungsgehalt in die vorliegende Beschreibung einbezogen wird, zur umfassenden Klärung heranzuziehen.

Dabei ist hinsichtlich der üblichen Türverriegelungssteuerungen bei Maschinen noch darauf hinzuweisen, daß diese stets der weiter vorn schon erwähnten Stillstandswächter bedürfen, bei denen es sich im üblichen Fall um mindestens einen Drehbewegungssensor handelt, der als Parallelschalter oder Serienschalter im Verriegelungskreis des Türmagneten so angeordnet ist, daß der Magnet erst betätigt werden kann bzw. zur Türöffnung veranlaßt werden kann, wenn der Stillstandswächter festgestellt hat, daß keine Drehbewegung oder sonstige Bewegung im Bereich der jeweils zu überwachenden Achse auftritt. Will man eine solche Türverriegelungssteuerung mit hoher Sicherheit redundant ausführen, dann bedarf es hierzu sogar zwei solcher Stillstandswächter oder Stillstandsschalter, die unabhängig voneinander entsprechende Drehbewegungssignale gewinnen und auf getrennten Pfaden in den Bereich des Ansteuerkreises für den Türmagneten bringen. Dies ist besonders aufwendig, da die meisten vorhandenen Sicherheitsschutzschaltungen für die Abschaltung jeder Drehbewegung der Maschine beispielsweise über Schaltschütze im Ansteuerbereich der Motoren ohnehin schon eine unter Umständen auch sehr aufwendige Drehbewegungssensorik aufweisen müssen.

Der Erfindung liegt die Aufgabe zugrunde, eine Tür- oder Schutzhaubenverriegelungssteuerung zu schaffen, die bei erhöhter Sicherheit eine redundante Drehbewegungs-Signalauswertung in ihr Steuerungsverhalten einbezieht und dennoch auf eine eigene äußere Sensorik zur Erfassung von (Dreh)Bewegungen verzichten kann einschließlich der gesamten hierzu sonst noch erforderlichen Peripherie.

## Vorteile der Erfindung

Die erfindungsgemäße Tür- oder Schutzhaubenverriegelungssteuerung löst diese Aufgabe mit den kennzeichnenden Merkmalen des Anspruchs 1 und hat den Vorteil, daß es gelingt, auch eine Tür- oder Schutzhaubensteuerung einschließlich Verriegelung und Entriegelung derselben zu schaffen, die redundant mit hoher Sicherheit arbeitet, in der Lage ist, die erforderlichen Freigabepfade für den Betrieb der Maschine zu schalten und, obwohl sie mit einer redundanten Stillstandsüberwachung ausgestattet ist, keine eigenen Drehbewegungssensoren benötigt.

Die Erfindung entnimmt die für eine Sicherheitstürsteuerung unbedingt notwendige Stillstandsinformation aus einer ohnehin vorhandenen Drehbewegungsüberwachungsvorrichtung und kann daher vollständig auf eine eigene Peripherie verzichten, so daß sich erhebliche Ersparnisse ergeben, zusammen mit dem Vorteil, daß das gewonnene Stillstandsüberwachungssignal redundant abgeleitet und ausgewertet wird, mit anderen Worten also die gleiche Sicherheit wie bei den hochwertigen Sicherheitsüberwachungsschaltungen entsprechend den DE-OS'en 38 37 218 bzw. 39 00 733 bzw. bei den den Sachverhalt übersichtlicher darstellenden entsprechenden Patentschriften erreicht wird.

Dies ist auch dann der Fall, wenn man lediglich aus einem der beiden, jede Achse insofern doppelt auf Drehbewegung überwachenden Meßsystemen ein Stillstandssignal ableitet, denn die beiden Meßsysteme, die mittels unterschiedlicher Encoder oder äquivalenter Abfrage die Drehbewegung jeder Achse doppelt überwachen, sind untereinander so verknüpft, daß in dem Moment, in welchem eines der Drehbewegungsachssignale noch eine Bewegung feststellt, die ganze Maschine über entsprechende Abschaltschütze abgeschaltet wird, so daß sich eine entsprechende Reaktion auf jeden Fall auch dem (anderen) Meßsystem mitteilt, welches beispielsweise gerade zur Signalgabe für den Stillstandswächter bei der Türverriegelung herangezogen ist. Die angestrebte redundante Sicherheit für den solchermaßen bei einer Tür- oder Haubensteuerung eingesetzten Stillstandswächter ist daher in allen Bereichen gewährleistet.

Der Erfindung gelingt daher nicht nur eine erhebliche Kostenersparnis und Vereinfachung bei einer solchen Türverriegelungssteuerung, da die entsprechend sonst benötigte äußere Peripherie einschließlich der Bewegungssensoren vollständig entfallen kann, sondern die gesamte Schaltung arbeitet darüber hinaus auch noch im Sinne doppelter Sicherheit redundant, was bei den bisher bekannten Türverriegelungssteuerungen notwendigerweise den Einsatz einer doppelten äußeren Abtastung von Bewegungen erforderlich gemacht hätte - dieser erfindungsgemäße Vorteil wird dadurch erzielt, daß sich die Türverriegelungssteuerung diese Redundanz bei den redundanten Sicherheitsvorrichtungen nach den genannten Druckschriften sozusagen entleiht.

Durch die in den Unteransprüchen aufgeführten Maßnahmen sind vorteilhafte Weiterbildungen und Verbesserungen der Erfindung möglich. Besonders vorteilhaft ist die problemlose Auswertung von eine Vielzahl von Drehbewegungen durchführenden Maschinen, indem entsprechende einzelne Stillstandssignale jeweils von den unterschiedlichen, zu den jeweiligen Achsen gehörenden Meßsystemen abgeleitet und in Reihe geschaltet wirkend bis zum Ansteuerkreis für die magnetische Verriegelung einer Tür oder einer Schutzhaube geführt sind.

Es ist auch möglich, die Verriegelungssteuerung auf mehrere Schutzhauben nach Art einer Kaskadierung der einzelnen Kontaktgaben auszulegen.

Zeichnung

Ausführungsbeispiele der Erfindung sind in der Zeichnung dargestellt und werden in der nachfolgenden Beschreibung näher erläutert. Es zeigen:

Fig. 1    ein bekanntes Überwachungssystem für Drehbewegungen mit zwei Achskreisüberwachungen in Form eines Blockschaltbildes, welches der Fig. 1 der zum Stand der Technik gehörenden Patentschrift 39 00 733 entspricht und auf deren redundanter Sicherheits-Drehzahlauswertung auch die vorliegende Türverriegelungssteuerung hinsichtlich der Gewinnung von Stillstandswächter-Signalen basiert;

Fig. 2    schematisiert eine Ausführungsform von stößelbetätigten Kontaktschaltern in Verbindung mit einem Verriegelungsmagneten bei einer Türverriegelung und

Fig. 3    eine Kaskadenschaltung der jeweiligen Kontakte und zugehörigen Verriegelungsmagnete dann, wenn mehr als eine Schutztür oder Schutzhaube vorhanden ist

Fig. 4    zeigt eine mögliche Ausführungsform einer Sicherheitsrelaiskombination, die auch einen Freigabekreis und den manuellen Ansteuerkreis (zustimmenden Kontaktkreis) für die Türhaubenverriegelung bzw. Entriegelung enthält

Fig. 5    zeigt die Gewinnung eines doppelten, insofern also redundanten Relaisschaltsignals für die Stillstandsüberwachung aus der Stillstandssummenmeldung der jeweiligen Achskreisüberwachungen mit Ausgangsrelaiskontakten im manuellen Zustimmkontaktkreis, zur Aufrechterhaltung der erforderlichen Redundanz auch in diesem Bereich und

Fig. 6 zeigt eine mögliche Ausführungsform der Ableitung des Stillstands-Wächtersignals dann, wenn mehr als eine Achse auf Drehbewegung oder auf eine sonstige Bewegung zu überwachen ist.

Beschreibung der Ausführungsbeispiele

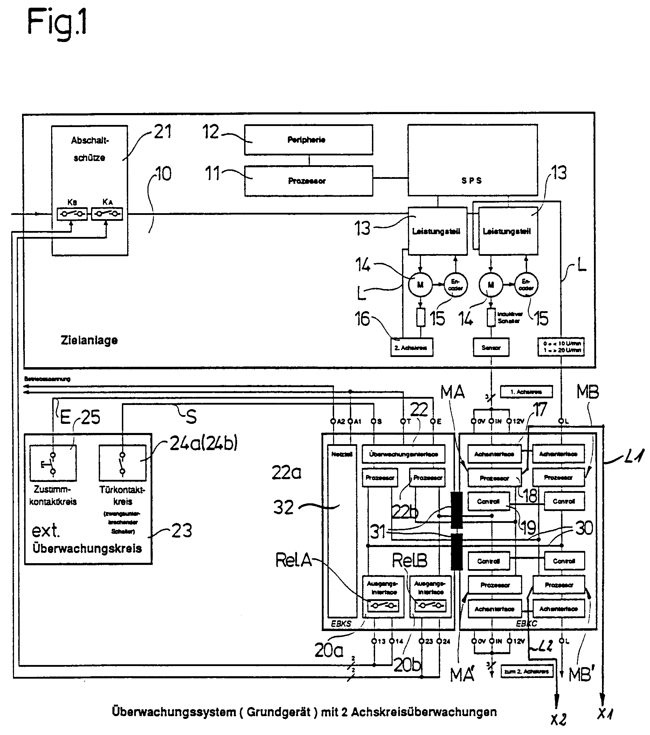

Um die Erfindung in einen technisch verständlichen Zusammenhang zu stellen, wird im folgenden zunächst anhand der Darstellung der Fig. 1 auf einige grundsätzliche Gegebenheiten bei dem bekannten Drehüberwachungssystem entsprechend deutschem Patent 39 00 733, bei dem je nach der Anzahl der zu überwachenden Achsen ferner ein modularer Aufbau der Überwachungsschaltungen vorgesehen ist, näher eingegangen.

In Fig. 1 ist die zu überwachende Maschine als Zielanlage mit 10 bezeichnet. Sie gehört nicht zum Bereich der in dieser Figur gezeigten Drehüberwachungsschaltung und besteht, ohne hierauf genauer einzugehen, aus einem geeigneten Prozessor oder Steuerteil 11, einer dem Steuerteil 11 zugeordneten Peripherie 12 und vom Prozessor angesteuerte Leistungsteile 13, welche, auch durch Rückmeldung, einen geregelten Betrieb der vom Leistungsteil jeweils angesteuerten Bewegungseinheit 14, beispielsweise eines Elektromotors möglich machen.

Die Elektromotoren, deren jeweilige Ausgangsdrehbewegungen bei dem dargestellten Ausführungsbeispiel der Erfindung überwacht werden sollen und die beispielsweise die Antriebsmotoren der Spindeln einer Drehmaschine, einer Fräse, eines Roboters o.dgl. sein können, sind jeweils mit 14 bezeichnet.

Grundsätzlich sind Art und Aufbau der Zielanlage beliebig; dabei ist bei diesen für jeden Achskreis ein Leistungsteil 13 vorgesehen, dessen Leistungs-Stromzuführung über einen Abschaltschutzbereich 21 erfolgt, der vom Ausgangskreis der zum Grundgerät gehörenden Stromversorgungseinheit beaufschlagt ist. Der Abschaltschutzbereich 21 umfaßt zwei in Reihe geschaltete Abschaltschütze KB und KA, die jeweils von eigenen Ausgangs-Interfaceschaltungen 20a, 20b der Stromversorgungseinheit EBKS beaufschlagt sind.

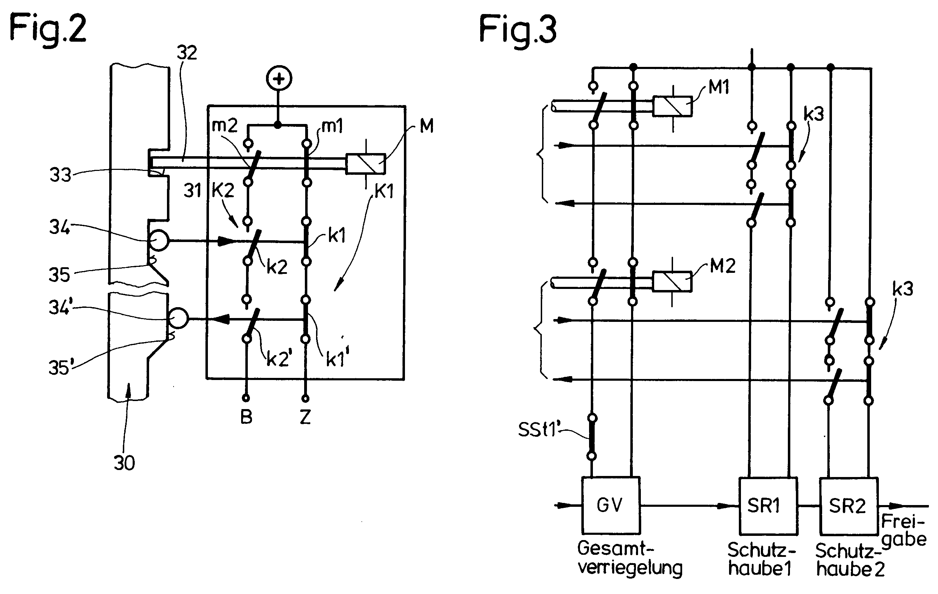

Zur Überwachung der Bewegung oder Drehbewegung jedes Achskreises können zwei verschiedene, aber auch unterschiedliche Bewegungssensoren vorgesehen sein, die auch als Encoder bezeichnet werden. Bevorzugt ist jedem Achskreis, also jeder Spindel beispielsweise nur ein äußerer Drehbewegungsgeber 15 zugeordnet und in den Fig. 1 und 2 als Signal IN proportional zur Drehbewegung bezeichnet, während ein die redundante Funktion der Achskreise sicherstellende Bestätigungssignal als Signal L vom jeweiligen Leistungsteil 13 für den entsprechenden Achskreis abgeleitet wird und so ebenfalls zum jeweiligen Achskreis-Funktionsblock 16 gelangt.

Aus der Darstellung der Fig. 1 erkennt man, daß jede Kontroll- bzw. Überwachungseinheit EBKC zwei unabhängige Achskreis-Signal-Daten verarbeiten kann, so daß entsprechend der Fig. 1 ein aus einem Grundgerät bestehendes Überwachungssystem zwei separate Achskreisüberwachungen, wie angegeben, durchführen kann.

Die verwendeten Encoder tasten die von der jeweiligen Ausgangswelle geleistete Drehbewegung in beliebiger Weise ab, sind beispielsweise also optische, induktive oder kapazitive Näherungsschalter oder Geber, wobei auch Hall-Generatoren, inkrementale Drehgeber, Magnetfeldplatten-Annäherungsschalter u.dgl. in Frage kommen.

Die beiden relevanten Ausgangssignale pro bewegter Achse gelangen über ihre entsprechenden Geräteeingänge IN bzw. L zum zugeordneten Überwachungs-Meßsystem MA, MB für den ersten Achskreis bzw. MA', MB' für den zweiten Achskreis.

Jedes der Meßsysteme wertet die eingehenden Drehbewegungssignale IN bzw. L auf limitierte vorgegebene Werte aus und kann für jedes relevante Drehsignal ein Achsinterface 17, eine nachgeschaltete Prozessoreinheit 18 und eine sich daran anschließende Steuer- bzw. Kontrollschaltung 19 umfassen, deren jeweilige Ausgangssignale (in jeder Kontrolleinheit EBKC bzw. ergänzende Überwachungseinheit EBKU befinden sich demnach vier Kontrollschaltungen) über Querverbindungsleitungen 30 und über zwischen ihnen befindliche Steckkontaktverbindungen 31 zu Ausgangs-Interfaceschaltungen 20a, 20b gelangen, die der Abschalt-Schützansteuerung dienen.

Eine gemeinsame Stromversorgungseinheit EBKS verfügt ergänzend zu den Ausgangs-Interface-Schaltungen 20a, 20b neben einem Netzteil 32 zur allgemeinen Stromversorgung der bzw. weiterer angeschlossener Einheiten EBKC z.B. mittels jeweiliger Steckkontakte über ein gemeinsames Überwachungs-Interface 22.

Ein externer Überwachungskreis 23 umfaßt einen bzw. vorzugsweise zwei getrennte Türkontaktkreise 24a, 24b sowie einen Zustimmkontaktkreis 25, der als Taster wieder öffnet, wenn seine manuelle Betätigung durch eine Bedienungsperson beendet wird.

Bei Schutzeinrichtungen mit normaler Sicherheit enthält der Überwachungskreis 23 nur einen Türkontaktkreis (wie in Fig. 1 dargestellt) in Form eines zwangsunterbrechenden Schalters, dessen Ausgangssignal S dem Eingang S' des Überwachungsinterface 22 zugeführt ist.

Das Signal E des Zustimm-Kontaktkreises (zwangsunterbrechender Schalter 25) gelangt zum Eingang E' des Überwachungsinterface.

Hinsichtlich der Ausgangskreis-Steuerung durch die Stromversorgungseinheit EBKS ist noch zu erwähnen, daß den Ausgangsinterface-Schaltungen 20a, 20b Ausgangsschaltrelais Rel A und Rel B zugeordnet sind, die die Reihenschaltung der Abschaltschütze jeweils zu den Leistungsteilen 13 der Zielanlage ansteuern.

So viel zur Ausführungsform einer bekannten, Bewegungen bzw. Drehbewegungen redundant überwachenden Sicherheitsschaltung; die Erfindung ist als Erweiterung des aus der Stromversorgungseinheit EBKS und einer zugeordneten Kontrolleinheit EBKC bestehenden Grundgeräts konzipiert und betrifft den in den bekannten Druckschriften dann nicht mehr weiter erläuterten Bereich der durch die Erfindung gesicherten redundanten Tür- oder Schutzhaubenverriegelung.

In Fig. 2 ist schematisiert ein Teil einer Tür oder Schutzhaube 30 angedeutet; es kann sich hierbei auch um eine Führungsleiste, eine Schiene oder ein anderes Teil einer Tür handeln, mit einem speziell ausgebildeten Nockenprofil 31, so daß, wie bei dem hier dargestellten Ausführungsbeispiel bevorzugt, die Stößelverlängerung 32 eines Verriegelungsmagneten M in eine geeignete Ausnehmung 33 der Tür zu deren Verriegelung eingreifen kann, während Schaltkontakte k1, k2 bzw. k1', k2' betätigende Nockenstößel 34, 34' von zugehörigen Nockenlaufbahnen 35, 35' der Türschiene betätigt werden. Im folgenden wird zur Vereinfachung durchgehend von einer Tür oder einer Türverriegelung gesprochen, wobei - wie es sich versteht - beliebige Schutzhaubeneinrichtungen hierunter zu verstehen sind.

Die Arretierung der Tür, also deren Verriegelung durch den Verriegelungsmagneten M erfolgt bei dessen stromlosem Zustand (Federverriegelung), die anderen Schaltkontakte dienen der Abgabe von Statusdaten.

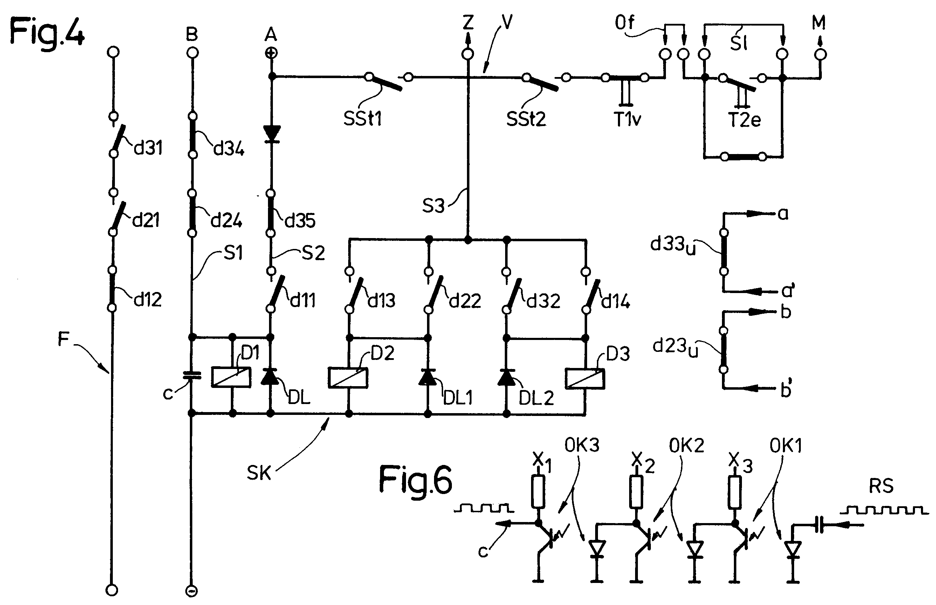

Damit ergeben sich zwei verschiedene, parallelliegende Stromkreise K1 und K2, die Ausgangsanschlußpunkte (überleitend zu der Sicherheitsrelaiskombination der Fig. 4) je nach Position der Schutzhaube und Schaltstellung der vom Verriegelungsmagneten M gesteuerten Schaltkontakte m1 und m2 mit Versorgungsspannung verbinden.

Zur weiteren Erläuterung wird auf die Darstellung der Fig. 4 Bezug genommen. Bei dieser dort gezeigten Sicherheitsrelaiskombination ergeben sich verschiedene Stromkreise, nämlich zunächst ein Freigabepfad F, die eigentliche Sicherheitsrelaiskombination SK, bestehend aus den Relais D1, D2 und D3 sowie den Ent- bzw. Verriegelungsstrompfad V als manueller Zustimmkreis für die Türent- bzw. -verriegelung über den Verriegelungsmagneten M.

Das erste Relais D1 ist an zwei verschiedene Stromkreise angeschlossen, einen ersten Stromkreis S1, der die Reihenschaltung zweier Relaiskontakte d24 und d34 beinhaltet (diese sind von den zur erhöhten Sicherheit doppelt vorgesehenen Schwesterrelais D2 und D3 geschaltet), sowie an einem zweiten Stromkreis S2, in Reihe mit einem Relaisschaltkontakt d35 und einem eigenen Selbsthalte-Schaltkontakt d11. Parallel zu dem Relais D1 kann noch eine Löschdiode DL sowie ein Kondensator C geschaltet sein. Der Stromkreis S2 ist an seinem Anschlußpunkt A ständig mit positiver Versorgungsspannung verbunden, während der Stromkreis S1 mit dem Türkreis-Stromkreis K2 in Verbindung steht.

Zum besseren Verständnis ist noch darauf hinzuweisen, daß bis auf die als Stillstandswächter fungierenden Stillstandsrelaiskontakte SSt1 und SSt2 sämtliche anderen Relaiskontakte bzw. -schalter in der stromlosen Position der zugehörigen Relais D1, D2 und D3 dargestellt sind.

Dabei befinden sich die Relais D2 und D3 im Türkreis-Versorgungsstrompfad K1 (Anschlußpunkt Z); sie sind in identischer Schaltung und Struktur parallelgeschaltet und verfügen in ihrem vom Anschlußpunkt Z kommenden Stromkreis S3 über eigene Selbsthaltekontakte d22 und d32, denen vom Relais D1 geschaltete Kontakte D13 und D14 parallelliegen. Auch hier können parallel zu den Relaiswicklungen noch Löschdioden DL1 und DL2 vorgesehen sein.

Die Grundfunktion des gesamten Systems ist dann wie folgt, wobei sich die folgenden Schaltphasen ergeben:

Phase I

Es sei angenommen, daß die Drehbewegungen der Maschine beendet sind, so daß, worauf an anderer Stelle später noch eingegangen wird, die beiden redundant vorhandenen Stillstands-Überwachungsschaltkontakte SSt1 und SSt2 schließen. Es ergibt sich dann ein geschlossener Strompfad vom Versorgungsanschlußpunkt A zum Verriegelungsmagneten M, wenn auch der Entriegelungstaster T2e betätigt wird. Hierdurch wird der Entriegelungsmagnet M in Fig. 2 bestromt; er öffnet seinen Schaltkontakt m1 und schließt m2, so daß, worauf weiter unten noch eingegangen wird, der Strompfad K1 zum Anschlußpunkt Z stromlos wird und jedenfalls das Relais D3 (und D2) abfällt und im dann stromlosen Zustand seinen Parallelkontakt d36 zum Entriegelungstaster T2e schließt, so daß sich für den Verriegelungsmagneten M eine Art Selbsthaltekreis ergibt.

Wird dann die Haube geöffnet, dann verändern auch die Türstatuskontakte k1, k1' bzw. k2, k2' ihre jeweilige Schaltposition und der Strompfad K2 schließt vollständig und legt Versorgungsspannung an den Anschlußpunkt B.

Phase II

Daraufhin zieht Relais D1 an, denn da Anschlußpunkt Z stromlos ist, sind die Reihenkontakte d34 und d24 geschlossen. Das Relais D1 schließt seinen Selbsthaltekontakt d11 im Stromkreis S2, öffnet d12 im allgemeinen Freigabepfad, so daß (bei jetzt geöffneter Tür) eine Vielzahl von Sperrfunktionen wirksam werden können im Maschinenbereich, in der Peripherie oder sonstwo, worauf nicht weiter eingegangen zu werden braucht.

Ferner schließt dieses erste Relais D1 seine Relaiskontakte d13 und d14 und schließt hierdurch Stromkreise für die spätere Anschaltung der Relais D2 und D3 vorbereitend.

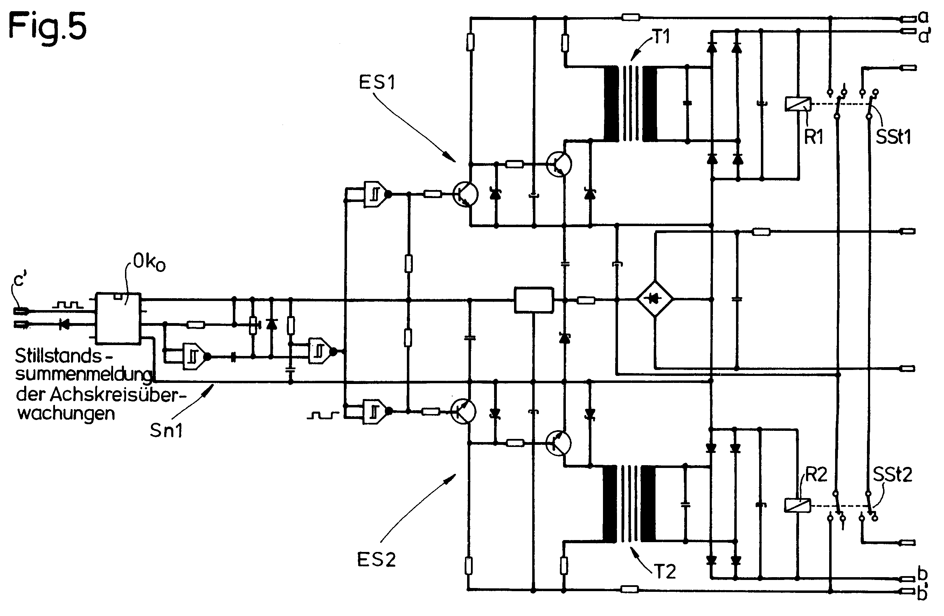

Während dieser Phase II können beliebige Arbeiten an der Maschine bei geöffneter Tür oder Schutzhaube vorgenommen werden, wobei infolge Stromlosigkeit der Relais D2 und D3 auch in Fig. 4 lediglich angedeutete Relaiskontakte D33u und D23u geschlossen sind, die, worauf später noch anhand der Darstellung der Fig. 5 eingegangen wird, verhindern, daß sich ein ständiges Hin- und Herschalten von die Stillstandsüberwachungsrelais SSt1 und SSt2 schaltenden Relais und damit auch des Verriegelungsmagneten ergibt, wenn bei geöffneter Haube beispielsweise Einstellarbeiten einschließlich Kriechbewegungen bis zu vorgegebenen Grenzwerten an der Maschine durchgeführt werden.

Phase III

Die Bedienungsperson schließt zu einem beliebigen Zeitpunkt die Tür, so daß die Statuskontakte k1 und k1' schließen und betätigt einen Verriegelungstaster T1v, um so den Versorgungsstromkreis V für den Entriegelungsmagneten M zu unterbrechen. Dieser war ja durch den geschlossenen Relaiskontakt d36 bisher noch aufrechterhalten gewesen. Hierdurch wird der Verriegelungsmagnet M stromlos und schließt auch seinen Kontakt m1.

Schon vorher hat sich infolge Öffnen der Schaltkontakte k2 und k2' im Strompfad K2 der Stromkreis S1 stromlos geschaltet, bei aufrechterhaltener Versorgung des Relais D1 über seinen Selbsthaltekontakt d11 im Parallelstromkreis S2.

Sobald dann durch den umgeschalteten Verriegelungsmagneten der Stromkreis K1 den Anschlußpunkt Z mit Spannung versorgt, werden die Relais D2 und D3 über die vom Relais D1 noch geschlossen gehaltenen Schaltkontakte d13 und d14 bestromt, schließen eigene Selbsthaltekontakte d22 und d32, wobei dann gleichzeitig über das Relais D3 dessen Schaltkontakt d35 öffnet und das erste Relais D1 endgültig stromlos geschaltet wird. Dies bedeutet, daß im Freigabekreis der Relaiskontakt d12 (vom Relais D1) schließt, bei gleichzeitigem Schließen der beiden Relaiskontakte d21 und d31 ebenfalls im Freigabekreis, so daß dieser nunmehr aktiviert ist. Gleichzeitig öffnen die vom Relais D3 gesteuerten Schaltkontakte d36 (parallel zum Entriegelungstaster) sowie die Stillstandsunterdrückungs-Kontakte d33u d23u.

Die Maschine kann dann in Betrieb genommen werden (Freigabepfad ist geschaltet), woraufhin dann auch die Stillstandsmeldekontakte SSt1 und SSt2 öffnen, bei einsetzender Drehbewegung.

Kehrt man jetzt zur Darstellung der Fig. 1 zurück, dann erkennt man, daß die für jede Achse redundante Stillstands-Bewertungssignale-beispielsweise aus Schaltzuständen von bistabilen Elementen-jeweils im Bereich des Prozessors 18 jedes Meßsystems gewonnen werden können; es sind daher zusätzliche Verbindungsleitungen L1, L2 vorgesehen, die mit einem relevanten Schaltelement im Bereich des Prozessors, etwa einem einen entsprechenden Schaltzustand aufweisenden Flipflop verbunden sind, so daß sich an den Ausgängen der Leitungen L1 und L2 Zustandssignale X1, X2, X3 ... ergeben, die von sich aus redundant und daher mit der erforderlichen Sicherheit Informationen zur Verfügung stellen, die über das Drehbewegungsverhalten jeder Achse Auskunft geben.

Vereinbarungsgemäß wird dabei im Bereich des Prozessors ein bei Stillstand der erfaßten Drehbewegung hochliegendes Signal X1, X2 ... erfaßt, wobei für jede Achse lediglich ein solches Signal X1 bzw. X2 bzw. X3 benötigt wird, also auch nur von einem der beiden für jede Achse zuständigen Prozessoren jedes Meßsystems das entsprechende Signal abgefragt wird. Dies ist bei gesicherter Redundanz deshalb möglich, weil diese Signale aufgrund der Konzeption des Achskreis-Drehüberwachungssystems ohnehin redundant sind, bei entsprechender Verknüpfung der beiden Meßsysteme MA und MB für jede Achskreisüberwachung untereinander und aufgrund des redundanten Abschaltverhaltens im Störungsfall.

Da nicht selten mehrere Achsen zu überwachen sind, ergeben sich deshalb auch mehrere solcher Stillstandsmeldesignale X1, X2 ...; ist nur eine Achse vorhanden, ergibt sich auch lediglich nur ein solches Signal, welches zur Weiterverarbeitung der Schaltung der Fig. 5 zugeleitet wird bzw. dann, wenn mehrere Signale X1, X2 ... vorhanden sind, zunächst die Sicherheitsaufbearbeitungsschaltung der Fig. 6 durchläuft. Hierbei handelt es sich um eine der Anzahl zu überwachender Achsen entsprechende Anzahl von in Reihe geschalteten Optokoppler/Verstärkerstufen OK1, OK2, OK3,...wobei die bei Stillstand der überwachten Achsen hochliegenden Stillstandsmeldesignale X1, X2, X3 jeweils mit den Kollektoren der Fototransistoren der Optokoppler (über Widerstände) verbunden sind. Hierdurch werden die entsprechenden Transistoren und damit auch die Optokoppler aktiv geschaltet, so daß eine mittelfrequente Eingangsspannung, beispielsweise eine Rechteckspannung RS (als Beispiel etwa 2750 Hz - dieser Wert ist unkritisch) bis zum Ausgang C einer solchen Reihenschaltung gelangt. Man erkennt, daß eine Unterbrechung im Übertragungsstrompfad für die mittelfrequente Signalspannung RS immer dann auftritt, wenn eines der Stillstandsmeldesignale ausbleibt, da in diesem Fall die Speisespannung für den entsprechenden Fototransistor wegbleibt.

Die Signalfrequenz gelangt dann auf den Eingang C' einer Aufbereitungs- und Verarbeitungsschaltung für die Stillstandsmeldesignale; nach galvanischer Trennung über einen Optokoppler OK0 wird das dynamische Stillstandsmeldesignal in nachfolgenden Stufen Sn1 aufbereitet, so daß sich ein sauberer Rechteckverlauf ergibt und wird dann aufgeteilt und zur Ansteuerung von Ausgangsrelais über jeweilige dynamische Endstufen ES1, ES2 unter Einschluß von Trenntransformatoren T1, T2 geführt. Den Transformatoren sind dann jeweils Ausgangsrelais R1, R2 nachgeschaltet, die die schon in Fig. 4 erwähnten Stillstandswächter-Schaltkontakte SSt1, SSt2 schalten, die in Fig. 5 nochmals dargestellt sind. Die Aufteilung auf zwei durch das zunächst einkanalige dynamische Stillstandsmeldesignal angesteuerte Ausgangsrelais R1 und R2 erfolgt an dieser Stelle aus Gründen der Aufrechterhaltung der redundanten Sicherheit, da an dieser Stelle Relais an dem Schaltungsaufbau beteiligt sind. Eine entsprechende zweikanalige Führung auch des dynamischen Stillstandsmeldesignals im Bereich der Fig. 6 ist nicht erforderlich, da eine Störung immer nur zum Ausfall dieses Signals führen würde, was bei fehlender Ansteuerung der Relais R1, R2 lediglich zur Folge hat, daß die Stillstandswächter-Schaltkontakte SSt1 und SSt2 (Fig. 4) eben nicht schliessen und daher die Haube auch nicht entriegelt werden kann. Die Sicherheit ist in diesem Schaltungsbereich der Optokoppler-Reihenschaltung OK1, OK2 ... durch die dynamische Signalführung gegeben.

Hier ist noch ein weiterer Gesichtspunkt von Bedeutung, der darin besteht, daß bei geöffneter Haube, also üblicherweise in einer Einrichtphase eine Bewegung gelegentlich auftreten kann, anschließend kommt es wieder zum Abstoppen usw., was zur Folge hat, daß der Verriegelungsmagnet ständig anziehen und wieder abfallen würde (der Schaltungspunkt Z in Fig. 4 ist nicht bestromt aufgrund der Kontaktgabekonfiguration der Fig. 2 bei geöffneter Haube) so daß die Relaisschaltkontakte d36 sowie ferner d33u und d23u, und hierauf wird gleich eingegangen, geschlossen sind.

Die Anschlüsse a, a' bzw. b, b' dieser beiden Schaltkontakte sind mit entsprechend bezeichneten Eingangsanschlüssen in Fig. 5, rechte Seite verbunden, so daß bei geöffneter Haube eine Stillstandsunterdrückung resultiert, indem nämlich eine Erregung der Ausgangsrelais R1 und R2 durch dieses Durchverbinden der Anschlüsse a, a' bzw. b, b' in Fig. 5 unterbunden wird. Mit anderen Worten, die Stillstandsüberwachung wird bei geöffneter Haube und entsprechenden Einrichtbedingungen unterdrückt.

Die Sicherheitsrelaiskombination aus den Relais D1, D2 und D3 ist selbstkontrollierend und arbeitet daher auch mit überhöhter Sicherheit, denn beispielsweise wäre ein Anzug des zunächst ansprechenden Relais D1 (Phase I) über den beim Öffnen der Haube bestromten Stromkreis S1 nur möglich, wenn beide Relais D2 und D3 in Ordnung sind, d.h. ihre Öffnerkontakte d34 und d24 geschlossen halten. Ist dies nicht der Fall, dann kann D1 nicht anziehen.

Sind die Ent- und Verriegelungstaster T1v und T2e direkt im Gerät eingebaut, dann können auch an anderer Stelle entsprechende weitere Tastschalter vorgesehen sein, die durch die Brücken Uf und S1 angedeutet sind; diese erfüllen die gleiche Aufgabe; bei der Brücke Uf handelt es sich um einen Öffnerkontakt und bei der Brücke S1 um einen Schließerkontakt.

Es ist auch möglich, die Stillstands-Signalgabe durch entsprechende Verzögerungsschaltungen zeitlich zu verzögern, beispielsweise um 400 ms, um hier eine den erfinderischen Rahmen natürlich nicht einschränkende numerische Zahl zu nennen, so daß auf jeden Fall sichergestellt ist, daß die Stillstandswächterkontakte SSt1 und SSt2 erst dann schließen, wenn mit Sicherheit keine Bewegung der überwachten Achsen mehr stattfindet.

Die Erfindung läßt sich auch einsetzen, wenn mehr als eine, beispielsweise zwei, drei oder mehr voneinander unabhängige Schutzhauben verriegelt bzw. entsprechend den Maßnahmen vorliegender Erfindung betreut werden müssen; es wird auf die Darstellung der Fig. 3 verwiesen, der entnommen werden kann, daß in diesem Falle die die Strompfade K1 und K2 bildenden Kontakte so aufgeteilt werden, daß die von den Verriegelungsmagneten M1, M2 geschalteten Kontakte in Reihe auf einen Gesamtverriegelungsblock GV arbeiten, während die die jeweiligen Tür-Statussignale liefernden, beispielsweise also stößelbetätigten Kontakte k3 bzw. k3' aus der Reihenschaltung mit den verriegelungsmagnetgesteuerten Kontakten herausgenommen und jeweils parallel auf eigene Sicherheitsrelaiskombinationsschaltungen SR1, SR2 geführt sind, die dann die Statussignale der jeweiligen Schutzhaube 1, Schutzhaube 2 u.dgl. verarbeiten und z.B. so ausgebildet sein können, wie die Sicherheitsrelaiskombination SK der Fig. 4. Durch die Kaskadierung der Schaltungsblöcke GV, SR1 und SR2 ... ergibt sich dann ein entsprechendes Freigabesignal für die Fälle, bei denen mehr als eine Schutztür vorhanden ist. Man bekommt so über jeden für jeweils eine Schutzhaube benötigten Sicherheitsrelaisbaustein einen Freigabepfad, die hintereinandergeschaltet die Gesamtfreigabe bewirken.

Zusammengefaßt: Erst bei Stillstand aller überwachten Achsen werden die schaltungsinternen Sicherheitsrelais aktiviert, wobei dieser Vorgang nur bei fehlerfreien Kontaktzuständen der Relais durchgeführt wird. Erst dadurch wird der Entriegelungskreis über den externen Entriegelungstaster T2e freigegeben.

Durch die Verknüpfung der Sicherheitsrelaiskombination SK wird bei der Funktionsart Kriechbetrieb mit Bewegung die Stillstandsauswertung eliminiert.

Die Verriegelungseinheit signalisiert daher über entsprechend relevante Kontakte unter Einbeziehung der Stillstandsbewertung die folgenden Zustände:
- die Sicherheitshaube ist geschlossen und die Verriegelung aktiviert oder
- die Sicherheitshaube ist nach Entriegelung geöffnet.

Diese Funktionsarten werden durch die Sicherheitsrelaiskombination so bewertet, daß
- der Freigabepfad für weitere externe Ansteuerung (z.B. Bewegungsfreigabe) aktiviert ist, bei entsprechender Freigabe der Stillstandsbewertung durch die dynamische Signalverarbeitung über die Versorgungspotentiale X1, X2 ... an der Optokopplerkette oder
- der Freigabepfad F ist nicht aktiviert, wobei dann die Stillstandsbewertung gleichzeitig durch die Kurzschlüsse über die Stillstandsunterbrecherkontakte d33u und d23u ausgeschaltet ist.

Durch diese letztere Maßnahme läßt sich ein störendes Ein- und Ausschalten der Verriegelung verhindern. Die Aktivierung des Freigabepfads ist nur möglich bei fehlerfreier Kontaktfunktion der Verriegelung sowie der Sicherheitsrelaiskombination.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in Ansprüchen niederzulegen.

## Patentansprüche

1. Tür- oder Schutzhaubenverriegelungssteuerung für eine Schutzeinrichtung mit normaler oder erhöhter Sicherheit bei insbesondere Drehbewegungen durchführenden Maschinen (Zielanlage), mit Abschaltschützen im Stromversorgungsbereich der Zielanlage, mindestens einem Türkontaktkreis und einem von einer Bedienungsperson manuell betätigbaren Zustimmkontaktkreis sowie ferner mit Drehbewegungssignale auswertenden Meßsystemen für jede Achse, dadurch gekennzeichnet, daß zur Einbeziehung einer redundanten Drehbewegungs-Signalauswertung auch für die Türsteuerung in dem einen Verriegelungsmechanismus (Verriegelungsmagnet M) für die Türschließung bzw. -öffnung enthaltenden Zustimmkontaktkreis (V) mindestens ein Stillstandsüberwachungswächter integriert ist, dessen (Schalt)Position unter Verzicht auf eigene Drehbewegungssensorik von mindestens einem der eine jeweilige Achse auf Drehbewegung überwachenden Meßsystemen (MA, MB) bestimmt ist.

2. Türverriegelungssteuerung nach Anspruch 1, dadurch gekennzeichnet, daß in dem mindestens einen manuell zu betätigenden Türentriegelungstaster (Schließer T2e) und mindestens einen manuell zu betätigenden Türverriegelungstaster (Öffner T1v) enthaltenden Zustimmkontaktkreis (V) zwei Stillstandsüberwachungswächter in Form von Relaisschaltkontakten (SSt1, SSt2) angeordnet sind, die jeweils von einem von mindestens einem Drehbewegungsüberwachungssignal gemeinsam (X1, X2) angesteuerten Ausgangsrelais (R1, R2) geschaltet sind.

3. Türverriegelungssteuerung nach Anspruch 1 oder 2, dadurch gekennzeichnet, daß jedes die Funktion Drehbewegung der Zielanlage überwachende Meßsystem (MA, MB) von einem eigenen, eine Drehbewegung der Zielanlage mindestens indirekt erfassenden Sensor beaufschlagt und zwei Meßsysteme (MA, MB) für jede Achse so miteinander verknüpft sind, daß jedes Abweichen der Drehbewegung von durch eine jeweilige Grundfunktionsart bestimmten Grenzwerten zur sofortigen Abschaltung der Antriebsenergie für die Zielanlage selbst führt.

4. Türverriegelungssteuerung nach einem der Ansprüche 1 bis 3, dadurch gekennzeichnet, daß lediglich von einem der beiden, die Drehbewegung jeder Achse überwachenden Meßsysteme (MA, MB) ein bei Achsstillstand hochliegendes Signal (X1, X2) abgeleitet und als Stromversorgungssignal ein dynamisches Steuersignal (RS) jeweils verstärkenden, untereinander in Reihe geschalteten Optokopplern (OK1, OK2, OK3) zugeführt ist, zur Bildung eines dynamischen Stillstandssummenmeldungssignals, welches nach Aufbereitung und Aufteilung sowie galvanischer Trennung Ausgangsschaltrelais (R1, R2) ansteuert, die bei einem Achsstillstand entsprechend dem Vorhandensein des Stillstandssummensignals ihre beiden in Reihe geschalteten Stillstandsüberwachungswächterkontakte (SSt1, SSt2) im auch die manuellen Taster in Reihenschaltung enthaltenden Zustimmkontaktkreis (V) für einen den Verriegelungsmechanismus bildenden Verriegelungsmagneten (M) schließen.

5. Türverriegelungssteuerung nach einem der Ansprüche 1 bis 4, dadurch gekennzeichnet, daß je nachdem, ob die eine oder mehrere Tür(en) oder Schutzhaube(n) offen oder geschlossen (ist) sind, unterschiedliche Strompfade (K1, K2) bestromt sind, die Relais (D1, D2, D3) einer Sicherheitsrelaiskombination unterschiedlich beaufschlagen, deren Ausgangsrelaisschaltkontakte einen allgemeinen Freigabepfad (F) sowie eigene Selbsthaltekontakte und Kontakte in den jeweils anderen Relaisversorgungsstrompfaden schalten.

6. Türverriegelungssteuerung nach einem der Ansprüche 1 bis 5, dadurch gekennzeichnet, daß der im stromlosen Zustand durch Federverriegelung die Tür oder Schutzhaube sperrende Verriegelungsmagneten (M) jeweils mindestens einen Öffner (m1) und einen Schließer (m2) schaltet, die jeweils in Reihe geschaltet sind mit entsprechenden Öffner- (k1, k1') und Schließerkontakten (k2, k2') von durch die Türoder Haubenbetätigung stößelgeschalteten Statusschaltkontakten derart, daß sich in Abhängigkeit zum Schaltzustand des Verriegelungsmagneten sowie eines geöffneten bzw. geschlossenen Zustands der Tür unterschiedliche Versorgungsstrompfade (K1, K2) bilden, deren Ausgangsanschlüsse (Z, B) entweder im geschlossenen Zustand der Tür (30) oder im geöffneten Zustand der Tür Spannung führen.

7. Türverriegelungssteuerung nach Anspruch 6, dadurch gekennzeichnet, daß mit dem im im geöffneten Zustand der Tür und bei bestromtem Verriegelungsmagneten (M) Strom führenden Strompfad (K2) ein erstes Sicherheitsrelais (D1 ) in Reihe mit Öffnern (d24, d34) der beiden anderen Schwester-Sicherheitsrelais (D1, D3) verbunden ist und daß das erste Sicherheitsrelais (D1) einen Öffner (d12) in einem Freigabepfad (F) aufweist.

8. Türverriegelungssteuerung nach Anspruch 6 oder 7, dadurch gekennzeichnet, daß das erste Sicherheitsrelais (D1) einen Selbsthaltekontakt (d11) in Reihe mit einem Öffner (d35) eines der anderen Relais (D2, D3) an konstanter Versorgungsspannung aufweist und ferner Schaltkontakte (d13, d14) in den beiden parallel und daher gemeinsam an den im geschlossenen Türzustand und abgefallenen Verriegelungsmagneten (M) Strom führenden Versorgungsstromkreis (S3, K1) für die beiden anderen Relais (D2, D3) enthält.

9. Türverriegelungssteuerung nach einem der Ansprüche 1 bis 8, dadurch gekennzeichnet, daß die beiden Schwester-Sicherheitsrelais (D2, D3) Öffnerkontakte (d33u, d23u) als Kurzschlußschalter für die Ausgangsrelais (R1, R2) aufweisen und hierdurch zu Schaltbewegungen des Verriegelungsmagneten führende, bei Einstellarbeiten (Kriechbewegungen der Zielanlage) entstehende Stillstandsmeldesignalschwankungen unterdrücken.

10. Türverriegelungssteuerung nach einem der Ansprüche 1 bis 9, dadurch gekennzeichnet, daß im Freigabepfad (F) Schließerkontakte (d21, d31) der im Normalbetrieb bei geschlossener und durch den abgefallenen Verriegelungsmagneten (M) verriegelter Tür bestromten Schwester-Sicherheitsrelais (D2, D3) liegen.

11. Türverriegelungssteuerung nach einem der Ansprüche 1 bis 10, dadurch gekennzeichnet, daß bei mehr als einer Schutztür die von dem jeweiligen Verriegelungsmagneten (M1, M2) geschalteten Kontakte (Öffner, Schließer) jeweils zugeordnet und in Reihe geschaltet zu einer Gesamtverriegelung (GV) zusammengefaßt sind, während die Türzustandskontakte (K3, K3') der jeweils vorhandenen Schutzhauben getrennt auf Sicherheitsrelaiskombinationsschaltungen (SR1, SR2) geführt sind, mit einer sich anschließenden Reihenschaltung der Gesamtverriegelung (GV) mit dem in Reihe geschalteten Schutzhauben-Sicherheitsrelaisschaltungen (SR1, SR2) zur Erzeugung eines gemeinsamen Freigabesignals, wobei in dem durch die Reihenschaltung der Verriegelungsmagnet-Schließerkontakte gebildeten Strompfad mindestens noch ein von den Ausgangsrelais (R1, R2) geschalteter Relaiskontakt (SSt1') angeordnet ist.

# Fig.1

Überwachungssystem ( Grundgerät ) mit 2 Achskreisüberwachungen

Fig.3

Fig.2

Fig.4

Fig.6

# Fig.5

ES1

0k$_O$

Stillstandssummenmeldung
der Achskreisüberwachungen

Sn1

ES2

T1

R1    SSt1

a
d

T2

R2    SSt2

b
b

EP 0 501 218 A2